**Europäisches Patentamt**

**European Patent Office**

**Office européen des brevets**

(19)

(11) Veröffentlichungsnummer: **0 228 395**
**B1**

(12) # EUROPÄISCHE PATENTSCHRIFT

(45) Veröffentlichungstag der Patentschrift:
**02.08.89**

(51) Int. Cl.⁴: **G 11 B 33/08**, G 11 B 33/02

(21) Anmeldenummer: **86903368.8**

(22) Anmeldetag: **06.06.86**

(86) Internationale Anmeldenummer:
**PCT/EP 86/00342**

(87) Internationale Veröffentlichungsnummer:
**WO 87/00337 (15.01.87 Gazette 87/01)**

(54) **ELASTISCHER GERÄTEFUSS FÜR GERÄTE DER UNTERHALTUNGSELEKTRONIK.**

(30) Priorität: **26.06.85 DE 3522842**

(43) Veröffentlichungstag der Anmeldung:
**15.07.87 Patentblatt 87/29**

(45) Bekanntmachung des Hinweises auf die Patenterteilung:
**02.08.89 Patentblatt 89/31**

(84) Benannte Vertragsstaaten:
**AT BE CH DE FR GB IT LI LU NL SE**

(56) Entgegenhaltungen:
**DE-A-3 316 870**
**DE-U-7 627 414**
**GB-A-662 260**
**US-A-2 572 718**

**Patents Abstracts of Japan, vol. 2, No.49 6 April 1978, page 777E78 & JP, A,5312305**

(73) Patentinhaber: **Deutsche Thomson- Brandt GmbH,
Hermann- Schwer- Strasse 3 Postfach 1307,
D-7730 Villingen- Schwenningen (DE)**

(72) Erfinder: **CASPERS, Johannes, An der Kapelle 1,
D-7730 Villingen- Schwenningen (DE)**

EP 0 228 395 B1

## Beschreibung

Die Erfindung betrifft einen elastischen Gerätefuß für Geräte der Unterhaltungselektronik gemäß dem Oberbegriff des Anspruchs.

Es ist bekannt, das Gehäuse von CD-Spielern mit elastischen Füßen zu versehen, um so eine Entkopplung von Trittschall und/oder anderem Beschleunigungskräften zu bewirken. Elastizität und Dämpfung der einzelnen Füße werden dabei so dimensioniert, daß bei den maximal vorkommenden Beschleunigungsamplituden unter Berücksichtung der Frequenz keine Beeinträchtigung der Wiedergabe erfolgt.

Wichtig ist die Lage der Resonanzfrequenz, die sich aus der Masse des CD-Spielers und der Größe der resultierenden Fuß-Elastizität ergibt. Bei einer Masse von beispielsweise M = 6 kg und einer Elastizität C von 10 $\frac{N}{mm}$ liegt die Resonanzfrequen $f_R$ bei 13 Hz, wenn die Belastung aller 4 Gehäusefüße gleich ist. Unter der Annahme daß für das vorliegende Gerät eine optimale Schockabsorption gegeben ist, sollten die Massen von Geräten, die zusätzlich auf dem CD-Spieler angeordnet werden (sogenannte HiFi-Türme mit beispielsweise Verstärker, Tuner, Kassettentonbandgerät), die optimale Schockabsorption nicht verändern. Nach dem Stand der Technik bleibt die Elastizität der Füße bei höherer Belastung annähernd konstant. In diesem Fall verschiebt sich jedoch die Resonanzfrequenz zu tieferen Frequenzen hin. Die Folge davon kann eine ungünstigere Trittschallempfindlichkeit sein. Im angeführten Beispiel würde sich die Resonanzfrequenz $f_R$ bei einer Zusatzmasse von 12 kg nach etwa 7,5 Hz verschieben.

Der vorliegenden Erfindung lag deshalb die Aufgabe zugrunde, eine Lösung für einen Gerätefuß zu finden, der durch geeignete Formgebung und Konstruktion sowie Dimensionierung von Elastizität und Dämpfung den zuvor beschriebenen Nachteil ganz vermeidet, nämlich eine Verringerung der Resonanzfrequenz bei höherer Belastung durch gleichbleibende Elastizität.

Die Lösung dieser Aufgabe erfolgt für einen elastischen Gerätefuß gemäß Oberbegriff des Anspruchs erfindungsgemäß durch die kennzeichnenden Maßnahmen.

Einzelheiten sowie ein Ausführungsbeispiel werden nachfolgend an hand der Zeichnung erläutert.

Dadurch, daß im Gerätefuß eine Übernahme-Elastizität vorgesehen ist, die ab einer Schwellwert-Belastung wirksam wird, kann die Resonanzfrequenz vorteilhafterweise konstant gehalten werden auch bei sehr unterschiedlichen Zusatzmassen.

Die Erfindung wird nun an hand der Zeichnung beschrieben. Diese zeigt in

Figur 1   einen elastischen Gerätefuß nach dem Stand der Technik im Querschnitt;

Figur 2   den Verlauf der Rückstellkraft in Abhängigkeit von der einen Gerätefuß belastenden Masse;

Figur 3   einen erfindungsgemäßen Gerätefuß mit einer inneren Übernahme-Elastizität im Querschnitt.

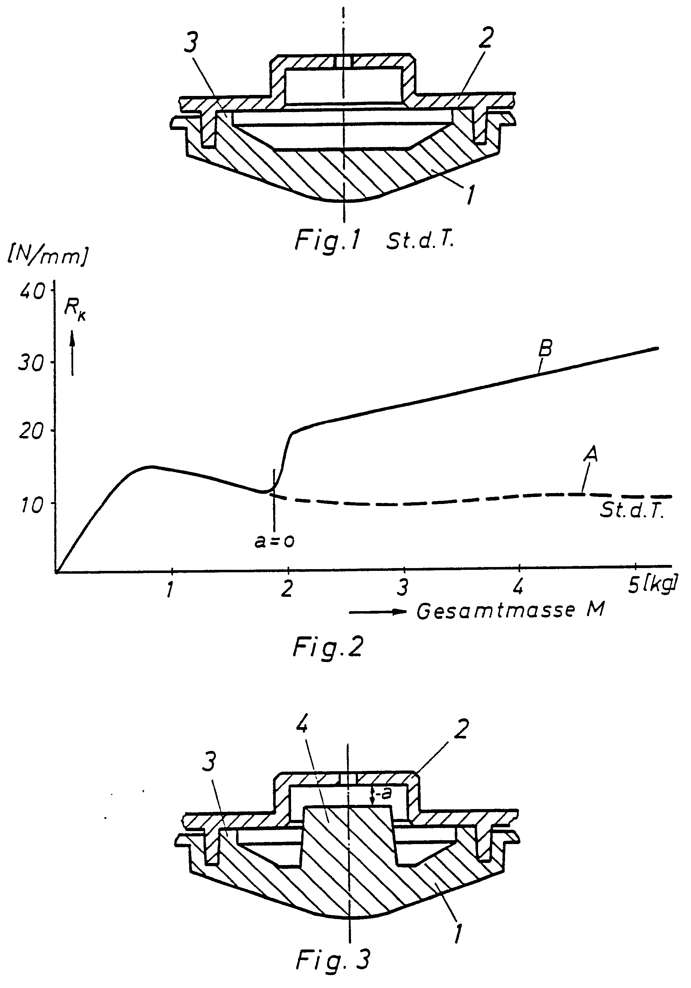

Der in Figur 1 gezeigte Gerätefuß (1) hat einen schüsselförmigen, hohlen Aufbau aus Gummi, der sich am Geräteboden 2 mit seiner umlaufenden Lippe 3 abstützt. Hierbei findet eine Schockabsorption mit annähernd konstanter Rückstellkraft $R_K = \frac{1}{c}$ bei unterschiedlicher Belastung statt. Eine entsprechende Kurve A ist in der Figur 2 eingezeichnet. Figur 3 enthält die Übernahme-Elastizität in Form eines angeformten Stempels 4, der nach einem Weg a bei zusätzlicher Belastung ab einer Schwelle bei a = 0 zur Wirkung kommt. Dabei ergibt sich, wie in der Figur 2 mit der Kurve B eingetragen, eine mit zunehmender Belastung steigende Rückstellkraft $R_K$. Beispielsweise bei 2 kg pro Gerätefuß wird der Abstand a = 0 (Schwellwert-Belastung) und $R_K$ steigt dann oberhalb 2,2 kg stetig an. Die Resonanzfrequenz bleibt im interessierenden Bereich der belastenden Massen etwa konstant.

Selbstverständlich kann der Schwellwert durch eine entsprechende Konstruktion der Elastizität nach Belieben variiert werden. Das gleiche gilt für den Verlauf der Rückstellkraft $R_K$ oberhalb des Schwellwertes.

## Patentanspruch

Elastischer Gerätefuß für Geräte der Unterhaltungselektronik, insbesondere CD-Spieler, der aus einem runden Gummiteil (1) besteht, dessen Querschnitt schüsselförmig gewölbt ist und an seinem oberen Rand mindestens einen umlaufenden Wulst (3) zur Halterung und Abstützung am Geräteboden (2) aufweist, und dessen Höhe sich bei Belastung verringert, indem die Form elastisch verändert wird, <u>dadurch gekennzeichnet</u>, daß der Gerätefuß eine Übernahmeelastizität in Form eines im Inneren der Schüssel angeformten und sich in Richtung des Gerätebodens (2) erstreckenden Stempels (4) aufweist, wobei die Höhe des Stempels derart bemessen ist, daß in unbelastetem Zustand des Fußes die Stempeloberkante einen Abstand (a) zum Geräteboden (2) aufweist, welche Übernahmeelastizität ab der Schwellwertbelastung, wobei der Abstand (a) null ist, wirksam wird und dafür sorgt, daß die Rückstellkonstante $R_K = \frac{1}{c}$, wobei C die Elastizität ist, bei steigender Belastung oberhalb des Schwellwertes stetig zunimmt und dabei die Resonanzfrequenz, die bestimmt wird durch die Masse des Geräts bzw. der Geräte und die Elastizität C, etwa konstant bleibt.

## Claim

A resilient foot for apparatuses in entertainment electronics, particularly CD players, which consists of a round rubber member (1), the cross-section of which is curved in the form of a dish and comprises, at its upper edge, at least one encircling bead (3) for mounting and supporting on the bottom (2) of the apparatus, and the height of which is reduced under loading in that the shape is resiliently altered, characterised in that the foot has a take-over resilience in the form of a support (4) which is formed in the interior of the dish and extends towards the bottom (2) of the apparatus, the height of the support being such that in the unloaded state of the foot, the upper edge of the support is at a distance (a) from the bottom (2) of the apparatus, which take-over resilience becomes effective beyond the threshold loading at which the distance (a) is zero and ensures that the restoring constant $R_K = \frac{1}{C}$, in which C is the resilience, increases continuously with increasing loading above the threshold value, while the resonance frequency, which is determined by the mass of the apparatus or the equipment and the resilience C, remains substantially constant.

## Revendication

Pied élastique pour des appareils de l'électronique de loisirs, notamment des lecteurs de disques compacts, qui est constitué par une pièce cylindrique en caoutchouc (1), dont la section transversale est cintrée en forme de cuvette et comporte, sur son bord extérieur, au moins un rebord circonférentiel (3) permettant son maintien et son appui sur le fond (2) de l'appareil, et dont la hauteur diminue dans le cas de la présence d'une charge, par le fait que la forme est modifiée élastiquement, caractérisé en ce que le pied présente une élasticité de transfert par le fait qu'il se présente sous la forme d'un piston (4) formé par façonnage à l'intérieur de la cuvette et s'étendant en direction du fond (2) de l'appareil, la hauteur du piston étant dimensionnée de manière que, lorsque le pied n'est pas chargé, le bord supérieur du piston est séparé du fond (2) de l'appareil, par une distance (a), cette élasticité devenant active à partir de la charge correspondant à une valeur de seuil, pour laquelle la distance (a) est nulle, et garantissant que la constante de rappel $R_K = 1/C$, C représentant l'élasticité, augmente de façon continue lorsque la charge augmente en dépassant la valeur de seuil, et la fréquence de résonance, qui est déterminée par la masse du ou des appareils et par l'élasticité C, reste approximativement constante.

Fig.1   St.d.T.

[N/mm]

$R_K$

$a=0$

Gesamtmasse M

St.d.T.

Fig.2

Fig. 3